# EUROPÄISCHE PATENTSCHRIFT

(11) **EP 4 045 835 B1**
(45) Veröffentlichungstag und Bekanntmachung des Hinweises auf die Patenterteilung: **09.07.2025**
(21) Anmeldenummer: 20792958.9
(22) Anmeldetag: 13.10.2020
(51) Int. Cl.: F16L 43/00, F16L 41/14, F16L 47/28, F15D 1/04

(54) **VERBINDER FÜR FLUIDLEITUNGEN**
CONNECTOR FOR FLUID LINES
RACCORD POUR LIGNES DE FLUIDE

(30) Priorität: 17.10.2019 DE 102019128119; 25.03.2020 DE 102020108149
(43) Veröffentlichungstag der Anmeldung: 24.08.2022
(73) Patentinhaber: Voss Automotive GmbH, 51688 Wipperfürth (DE)
(72) Erfinder: THORMANN, Marius, 58454 Witten (DE); HAGEN, Harald, 51688 Wipperfürth (DE); RAJAN, Philippose, 50999 Köln (DE)
(74) Vertreter: Dr. Solf & Zapf Patent- und Rechtsanwalts PartG mbB
(86) Internationale Anmeldenummer: PCT/EP2020/078800
(87) Internationale Veröffentlichungsnummer: WO 2021/074163

(56) Entgegenhaltungen:
- DE-A1- 102009 039 983
- DE-A1- 19 543 256
- DE-U1- 202017 102 366

## Beschreibung

Die vorliegende Erfindung betrifft einen Verbinder für Fluidleitungen oder Fluidaggregate. Der Verbinder weist mindestens einen ersten Anschlussbereich, mindestens einen zweiten Anschlussbereich, einen Übergangsbereich und einen Fluidkanal auf. Der Übergangsbereich ist zwischen den Anschlussbereichen angeordnet. Der erste Anschlussbereich weist einen ersten Fluidkanalabschnitt, der Übergangsbereich einen zweiten Fluidkanalabschnitt und der zweite Anschlussbereich einen dritten Fluidkanalabschnitt des Fluidkanals auf. Der Fluidkanal im Verbinder setzt sich aus den drei hintereinander angeordneten Fluidkanalabschnitten zusammen und ist von einem Fluid durchströmbar.

Der erste Anschlussbereich und der zweite Anschlussbereich sind in einem Winkel α zueinander angeordnet. Der Winkel α ist kleiner als 180° und beträgt vorzugsweise 90°. Dadurch, dass der erste Anschlussbereich und der zweite Anschlussbereich in einem Winkel α zueinander angeordnet sind, definieren die Mittelachsen des ersten Fluidkanalabschnitts und des zweiten Fluidkanalabschnitts eine gedachte Ebene E. Beide Mittelachsen verlaufen in der Ebene.

Der zweite Anschlussbereich weist eine kreisförmige Außenkontur auf, wobei die im Wesentlichen kreisförmige Außenkontur nicht über die gesamte Erstreckung konstant sein muss, sondern auch Nuten, Ausnehmungen und Stege vorgesehen sind. Jedenfalls ist der zweite Anschlussbereich beispielsweise zur Verwendung als Stecker mit einer vordefinierten Nennweite ausgebildet.

Der Begriff "Fluid" ist als beliebiges, flüssiges und/oder gasförmiges Strömungs- bzw. Druckmittel zu verstehen. Ein gattungsgemäßer Verbinder eignet sich sowohl für hydraulische als auch für pneumatische sowie für hydropneumatische Anwendungen. Ein bevorzugtes Anwendungsgebiet des erfindungsgemäßen Verbinders ist die Verbindung von pneumatischen Bremssystemen an Kraftfahrzeugen, insbesondere Lastkraftfahrzeugen.

Verbinder der genannten Art sind im Stand der Technik in einer Vielzahl von Ausgestaltungen bekannt und im praktischen Einsatz weithin verbreitet. Derartige Verbinder werden üblicherweise einstückig entweder aus Metall, wie Messing, oder aus Kunststoff hergestellt. Sie dienen insbesondere in einem Kraftfahrzeug zum Verbinden von mindestens zwei Medienleitungen untereinander oder zur Anschlussverbindung mindestens einer Fluidleitung an ein Aggregat.

In einer Vielzahl von Fällen handelt es sich um gewinkelte Verbinder, die insbesondere als Spritzformteile ausgeführt sind. Die dem Verbinden dienenden Anschlussbereiche des Verbinders sind bezüglich ihrer Mittelachsen in einem Winkel zwischen 0° und weniger als 180° zueinander ausgerichtet.

Derartige Verbinder sind beispielsweise aus WO 2010/009942 A1 bekannt. Es wird ein Steckverbinder beschrieben, der einen als Dorn ausgebildeten Anschlussbereich aufweist und ferner durch eine Steckverbindung mit einem Aggregat verbindbar ist.

Aus DE 10 2009 039 983 A1 ist ein Verbinder bekannt, der aus mindestens zwei Anschlussabschnitten besteht, wobei die mindestens zwei Anschlussabschnitte jeweils zum Anschluss an eine Medienleitung oder ein Aggregat eingerichtet sind und zwischen einem Anschlussabschnitt angeordnet sind. Die Anschlussabschnitte weisen jeweils einen inneren Anschlusskanal auf.

Aus DE 20 2017 102 366 U ist eine Fluidarmatur für eine Fluidleitung mit einem Grundkörper bekannt. Der Grundkörper weist mindestens einen ersten Kanalzugang und mindestens einen zweiten Kanalzugang auf. Ferner ist in dem Grundkörper ein Einsatzraum ausgebildet, in den mindestens ein mindestens zweiteiliger Einsatz eingebracht ist.

DE 195 43 256 A beschreibt einen Rohrkrümmer für den Transport von Schüttgut und feststoffbefrachteten Flüssigkeiten oder Gasen. Anstelle eines kontinuierlichen, kreisförmig gebogenen Krümmers, beschreibt DE 195 43 256 A einen Krümmer, der aus drei Segmenten besteht. Das mittlere Segment kann zur Erhöhung der Verschleißfestigkeit eine verstärkte Wand aufweisen.

Da die erforderliche Wandstärke bei dem Einsatz von Metall aufgrund seiner größeren Festigkeit in der Regel geringer ist als bei dem Einsatz von Kunststoff, kann ein aus Metall gefertigter Verbinder bei gleichem Außenquerschnitt einen größeren Innenquerschnitt aufweisen. Unter materialökonomischen Gesichtspunkten ist es aufgrund der höheren Preise von Messing im Vergleich zu Kunststoff allerdings vorteilhaft, derartige Verbinder aus Kunststoff zu fertigen. Da die äußeren Dimensionen oft durch Nenndurchmesser festgelegt sind, ergibt sich bei der Konstruktion ein Spannungsfeld zwischen den Anforderungen an die mechanische Stabilität des Verbinders und dessen Strömungseigenschaften.

Der Erfindung liegt daher die Aufgabe zugrunde, einen Verbinder anzugeben, der kostensparend und einfach herstellbar ist, und dessen Strömungseigenschaften jedenfalls gleichwertig oder besser im Vergleich zu bekannten Verbindern sind.

Die vorgenannte Aufgabe ist bei einem gattungsgemäßen Verbinder durch den kennzeichnenden Teil von Anspruch 1 gelöst.

Bei einem Verbinder ist vorgesehen, dass der dritte Fluidkanalabschnitt im zweiten Anschlussbereich zumindest in einem ersten Teilabschnitt einen von einer Kreisform abweichenden Querschnitt aufweist, dass eine den dritten Fluidkanalabschnitt zumindest in dem ersten Teilabschnitt umgebende Wand mindestens einen außerhalb der Ebene E angeordneten, ersten Umfangsbereich mit einer Druckwandstärke aufweist, und dass die den ersten Teilabschnitt umgebende Wand mindestens einen die Ebene E schneidenden, zweiten Umfangsbereich mit einer gegenüber der Druckwandstärke vergrößerten Stützwandstärke aufweist.

Als nicht-kreisförmige Querschnitte für den Fluidkanal, insbesondere im dritten Fluidkanalabschnitt, haben sich polygonale Querschnitte, polygonale Querschnitte mit abgerundeten Ecken und/oder abgerundeten, insbesondere konvexen, Seitenkanten herausgestellt. Zudem sind ovale Querschnitte oder Querschnitte mit einem Kurvenverlauf vorgesehen. Als "Querschnitt" ist stets der Querschnitt zu verstehen, der sich orthogonal zur jeweiligen Mittelachse des Fluidkanals an der betrachteten Stelle erstreckt bzw. der von der Mittelachse als Normale durchtreten wird.

Die den dritten Fluidkanalabschnitt in dem ersten Teilabschnitt umgebende Wand weist zumindest in dem ersten Teilabschnitt mindestens einen außerhalb der Ebene E angeordneten, ersten Umfangsbereich mit einer Druckwandstärke auf. Die Ebene E wird durch die Mittelachsen des ersten Fluidkanalabschnitts und des dritten Fluidkanalabschnitts definiert. Der erste Umfangsbereich, dessen umgebende Wand mindestens eine Druckwandstärke aufweist, erstreckt sich folglich derart, dass er die Ebene E nicht schneidet. Der Umfangsbereich mit der Druckwandstärke ist - je nach Betrachtung - oberhalb bzw. unterhalb oder links bzw. rechts von der Ebene E angeordnet.

Vorzugsweise weist der Umfangsbereich mit der Druckwandstärke an jeder Stelle seiner Erstreckung einen Mindestabstand zur Ebene E auf. Beispielsweise entspricht der Abstand etwa dem Zweifachen der Druckwandstärke. Insbesondere wird der Abstand als kürzeste Distanz zwischen der Ebene E und einer Innenflanke der Wand entlang einer Ebenennormalen zur Ebene E bestimmt.

Ferner weist die den dritten Fluidkanalabschnitt in dem ersten Teilabschnitt umgebende Wand mindestens einen die Ebene E schneidenden, zweiten Umfangsbereich mit einer gegenüber der Druckwandstärke vergrößerten Stützwandstärke auf. Der Umfangsbereich mit der gegenüber der Druckwandstärke vergrößerten Stützwandstärke ist folglich derart angeordnet, dass er die Ebene E an mindestens einer Stelle in seiner Erstreckung schneidet. Die Stützwandstärke ist insbesondere innerhalb des zweiten Umfangsbereichs in radialer Richtung betrachtet an jeder Stelle ihrer Erstreckung größer als die Druckwandstärke. Über den Verlauf des zweiten Umfangsbereichs in Umfangsrichtung ist die Stützwandstärke entweder konstant oder verändert sich über den Umfang. Vorzugsweise ist die Stützwandstärke in dem Schnittbereich mit der Ebene E am größten und nimmt mit zunehmendem Abstand zur Ebene E - in Normalenrichtung - ab. Vorzugweise ist vorgesehen, dass die Stützwandstärke in Richtung der Erstreckung des ersten Teilabschnitts variiert, insbesondere aber an jeder Stelle größer als die Druckwandstärke ist.

Die Wandstärke wird in radialer Richtung, entlang einer von der Mittelachse des dritten Fluidkanalabschnitts ausgehenden Geraden bestimmt.

Beispielsweise ist die Stützwandstärke im Nutgrund einer Nut für eine Dichtung, insbesondere für eine Fluid- und/oder Schutzdichtung, am geringsten, insbesondere aber größer als die Druckwandstärke.

Erfindungsgemäß ist der Verbinder aus einem Kunststoff ausgebildet, beispielsweise als Spritzgussteil oder mittels additiver Fertigungsverfahren. Als vorteilhaft hat sich Polyamid, insbesondere Polyamid 6.6 (PA 6.6) und Polyamid 12 (PA 12), herausgestellt. Besonders bevorzugt ist auch vorgesehen, dass der Verbinder aus einem mit Glasfasern verstärkten Kunststoff hergestellt ist, insbesondere Kunststoff mit einem Glasfaseranteil von mindestens 30%, vorzugsweise genau 30% (GF 30), oder einem Glasfaseranteil von mindestens 50%, bevorzugt genau 50% (GF 50). Erfindungsgemäß ist der Verbinder einstückig ausgebildet.

Der vorliegenden Erfindung liegt die Erkenntnis zugrunde, dass die Dimensionierung der Wandstärke der den dritten Fluidkanalabschnitt, insbesondere in dem ersten Teilabschnitt, umgebenden Wand nicht in jedem Bereich des Umfanges auf Basis der, insbesondere durch Biegung, auftretenden mechanischen Belastungen erfolgen muss. Erfindungsgemäß werden unterschiedliche Umfangsbereiche separat dimensioniert, nämlich anhand der jeweils ausschließlich oder überwiegend auftretenden Belastungen, beispielsweise Betriebsdruck oder Biegung. Das ist insbesondere bei einem Verbinder aus einem Kunststoff vorteilhaft.

Dabei ist vorzugweise vorgesehen, dass solche Umfangsbereiche, die überwiegend oder ausschließlich durch den Betriebsdruck des Fluides innerhalb des Verbinders belastet werden, nur anhand des Fluiddrucks dimensioniert werden. Ferner werden solche Bereiche auf dem Umfang, deren maximale Belastung überwiegend durch mechanische Beanspruchung, insbesondere Biegung, verursacht wird, anhand dieser mechanischen Belastung dimensioniert und entsprechend verstärkt ausgebildet.

Der Erfindung liegt ferner die Erkenntnis zugrunde, dass insbesondere aus Biegung mit Komponenten in der Ebene E die größten mechanischen Belastungen auf den Verbinder, insbesondere den zweiten Anschlussbereich, resultieren. Die Belastung wird insbesondere durch Kräfte auf den ersten Anschlussbereich mit Kraftanteilen in der Ebene E verursacht. Insbesondere die die Ebene E schneidenden Umfangsbereiche sind daher mit einer gegenüber der Druckwandstärke gesteigerten Wandstärke ausgebildet. Durch die Steigerung der Wandstärke in dem zweiten Umfangsbereich wird das Biegewiderstandsmoment des zweiten Anschlussbereichs, insbesondere im ersten Teilabschnitt, vergrößert. Ferner wird der Widerstand gegen Scherbelastungen gesteigert.

Die außerhalb der Ebene E liegenden Umfangsbereiche, insbesondere mit einem Abstand zur Ebene E angeordnete Umfangsbereiche, sind überwiegend durch den Betriebsdruck des Fluides innerhalb des Verbinders belastet, so dass die Bereiche mit einer entsprechenden Druckwandstärke dimensioniert sind.

Die Erfindung weist gegenüber dem Stand der Technik den Vorteil auf, dass durch die belastungsoptimierte Dimensionierung der Wandstärke eine kostengünstige Fertigung bei gleichzeitig gleichwertigen oder besseren Strömungseigenschaften, insbesondere Durchflussmenge, und gleichwertiger Widerstandsfähigkeit - im Vergleich zu bekannten Verbindern - gegen die im Betrieb auftretenden Belastungen gewährleistet werden kann. Das gilt insbesondere für die Fertigung von Verbindern aus Kunststoff.

Gemäß einer ersten Ausgestaltung des Verbinders ist daher vorgesehen, dass die Druckwandstärke auf Basis eines Berstdruckes, unter Berücksichtigung eines Materials des Verbinders und des maximalen Betriebsdrucks in dem Verbinder, insbesondere mit einem Sicherheitszuschlag von mindestens 15%, insbesondere zwischen 40% und 80%, dimensioniert ist.

Die Druckwandstärke ist folglich so dimensioniert, dass sie dem üblichen Betriebsdruck des Verbinders standhält. Der übliche Betriebsdruck des Verbinders liegt im Bereich zwischen 0 bar und 20 bar, insbesondere zwischen 0 bar und 15,5 bar. Die maximale Betriebstemperatur beträgt etwa 100 °C.

Der Berstdruck hat einen Wert, der dem Vierfachen des maximalen Betriebsdruckes entspricht, insbesondere bei einer Temperatur zwischen 20 °C und 26 °C, bevorzugt bei einer Temperatur von etwa 23 °C. Vorzugsweise ist die Druckwandstärke gemäß den Anforderungen der Norm ISO 7628 (Stand 02/2010) dimensioniert. Vorteilhaft ist der Verbinder, insbesondere die Druckwandstärke, anhand des Berstdruckes der Norm ISO 7628 (Stand 02/2010) ausgelegt.

Beispielsweise ist die Druckwandstärke so dimensioniert, dass sie dem Vierfachen des maximalen Betriebsdruckes standhält, insbesondere bei einer Temperatur zwischen 20 °C und 26 °C, bevorzugt bei einer Temperatur von etwa 23 °C.

Alternativ oder zusätzlich ist die Druckwandstärke so dimensioniert, dass der Berstdruck bei einer Temperatur von 100 °C etwa dem Zwei- bis Dreifachen, insbesondere dem 2,5-fachen, des maximalen Betriebsdruckes entspricht.

Beispielsweise ist die Druckwandstärke so dimensioniert, dass der Berstdruck bei einer Temperatur zwischen 20 °C und 26 °C, bevorzugt bei einer Temperatur von etwa 23 °C, im Bereich zwischen 40 bar und 80 bar beträgt, vorzugsweise zwischen 55 bar und 65 bar beträgt. Insbesondere beträgt der Berstdruck bei einer Betriebstemperatur von 100 °C etwa zwischen 20 bar und 45 bar.

Der Verbinder ist vorzugsweise aus Kunststoff hergestellt. Beispielsweise variiert die Stützwandstärke über ihren umfänglichen Verlauf um bis zu 50%, vorzugsweise etwa 5% bis 10%. Die Druckwandstärke beträgt vorzugsweise ca. 1,4 mm. Die Stützwandstärke beträgt vorzugsweise ca. 2,775 mm.

Gemäß einer weiteren Ausgestaltung des Verbinders ist zudem vorgesehen, dass die Stützwandstärke auf Basis der maximal auftretenden mechanischen, insbesondere nicht aus einem Betriebsdruck resultierenden, Belastungen in dem ersten Teilabschnitt, insbesondere Biegung mit einer Komponente in der Ebene E, dimensioniert ist. Während des Betriebs kann eine Biegebelastung des zweiten Anschlussbereichs mit Kraftkomponenten in der Ebene E auftreten. Diese Belastung resultiert beispielsweise daraus, dass eine Kraft - mit einer in der Ebene E orientierten Komponente - auf den ersten Anschlussbereich wirkt, die sich über den Übergangsbereich auf den zweiten Anschlussbereich überträgt. In den die Ebene E schneidenden Bereichen ist der zweite Anschlussbereich, insbesondere die den Fluidkanal umgebende Wand, deshalb gegenüber der Druckwandstärke vergrößert ausgebildet.

Insbesondere um die Widerstandsfähigkeit des Verbinders gegen Biegebelastungen weiter zu steigern, ist es erfindungsgemäß vorgesehen, dass die den dritten Fluidkanal in dem ersten Teilabschnitt umgebende Wand mindestens zwei gegenüberliegend zueinander und außerhalb der Ebene E angeordnete erste Umfangsbereiche mit der Druckwandstärke aufweist, und dass die den dritten Fluidkanalabschnitt in dem ersten Teilabschnitt umgebende Wand mindestens zwei gegenüberliegend zueinander angeordnete, die Ebene E schneidende, zweite Umfangsbereiche mit mindestens der Stützwandstärke aufweist.

In dem ersten Teilabschnitt sind folglich auf dem Umfang gegenüberliegend oberhalb und unterhalb der Ebene E bzw. links und rechts der Ebene E die Umfangsbereiche mit der Druckwandstärke vorgesehen, da in diesen Bereichen lediglich bzw. hauptsächlich der innerhalb des Fluidkanals auftretende Betriebsdruck durch die Wand des Verbinders getragen werden muss. In den Bereichen, in denen zusätzlich die mechanische Belastung getragen werden muss, ist die Wand in zwei gegenüberliegend angeordneten, zweiten Umfangsbereichen verstärkt ausgebildet. Die Stützwandstärke ist eine Wandstärke, die gegenüber der Druckwandstärke vergrößert ist. Die Stützwandstärke ist größer als die Dichtwandstärke.

Die mechanischen Belastungen des zweiten Anschlussbereichs treten insbesondere in den Bereichen auf, in denen der zweite Anschlussbereich nach der Montage, beispielsweise in einem Aggregat, aus dem Aggregat hervorsteht. Gemäß einer weiteren Ausgestaltung hat sich deshalb als vorteilhaft herausgestellt, wenn der erste Teilabschnitt unmittelbar an den Übergangsbereich angrenzend ausgebildet ist. Die Umfangsbereiche mit der Stützwandstrecke erstrecken sich dabei ausgehend von dem Übergangsbereich in Richtung des von dem Übergangsbereich abgewandelten Endbereichs des zweiten Anschlussbereichs.

Vorteilhaft um die Durchflussmenge durch den Fluidkanal zu optimieren, ist gemäß einer weiteren Ausgestaltung des Verbinders vorgesehen, dass der Querschnitt des ersten Fluidkanalabschnitts kreisförmig ausgebildet ist, und dass der zweite Fluidkanalabschnitt zumindest teilweise nicht-kreisförmig ausgebildet ist. Vorzugsweise ist vorgesehen, dass der erste Fluidkanalabschnitt mit einem kreisförmigen Querschnitt in den zweiten Fluidkanalquerschnitt übergeht. Innerhalb des Übergangsbereichs geht der kreisförmige Querschnitt dann in den nicht-kreisförmigen Querschnitt über, der sich auch im dritten Fluidkanalabschnitt, insbesondere in dem ersten Teilabschnitt, fortsetzt. Insbesondere ist der innenliegende Eckbereich nicht verrundet und der außenliegende Eckbereich verrundet ausgebildet. Gleichwohl bleiben die Durchflusseigenschaften des Verbinders in einem vorteilhaften Bereich, insbesondere bei einem Druck von zwischen 0 bar und 20 bar, insbesondere 15,5 bar, und einem Nenndurchmesser des zweiten Anschlussbereichs von etwa 9,5 mm.

Gemäß einer weiteren Ausgestaltung des Verbinders hat sich zudem als vorteilhaft herausgestellt, wenn vorgesehen ist, dass im Übergangsbereich ein Übergang von einem kreisförmigen Querschnitt auf einen nicht-kreisförmigen Querschnitt, insbesondere im Verlauf des zweiten Fluidkanalabschnitts, im Winkel α zueinander erfolgt. Wenn beispielsweise der Winkel α genau 90° beträgt, geht der kreisförmige Querschnitt in einem Winkel von 90° in den nicht-kreisförmigen Querschnitt über. Auf diese Weise ist sichergestellt, dass die Richtungsänderung der Fluidströmung innerhalb des nicht-kreisförmigen Querschnitts erfolgt.

Beispielsweise um den Verbinder strömungstechnisch und mechanisch weiter zu optimieren, ist gemäß einer weiteren Ausgestaltung des Verbinders vorgesehen, dass sich mindestens der erste Umfangsbereich mit der Druckwandstärke und/oder mindestens der zweite Umfangsbereich mit mindestens der Stützwandstärke, ausgehend von dem zweiten Anschlussbereich, zumindest teilweise in den Übergangsbereich erstreckt. Vorzugsweise ist vorgesehen, dass sich zwei erste Umfangsbereiche mit der Druckwandstärke und zwei zweite Umfangsbereiche mit der Stützwandstärke, ausgehend vom zweiten Anschlussbereich, zumindest teilweise in den Übergangsbereich erstrecken. Auf diese Weise werden die mechanischen Vorteile des ersten Teilabschnitts im zweiten Anschlussbereich zumindest teilweise auf den Übergangsbereich übertragen. Insbesondere setzt sich dadurch der nicht-kreisförmige Querschnitt des dritten Fluidkanalabschnitts in dem zweiten Fluidkanalabschnitt, ausgehend vom zweiten Anschlussbereich, teilweise fort.

Ferner ist auch vorgesehen, dass sich zwei erste Umfangsbereiche mit der Druckwandstärke und ein zweiter Umfangsbereich mit der Stützwandstärke in den Übergangsbereich erstrecken. Insbesondere ist die Stützwandstärke im Übergangsbereich gegenüberliegend zum ersten Anschlussbereich, die Ebene E schneidend, angeordnet.

Für die Stabilität des Verbinders im Übergangsbereich hat sich gemäß einer weiteren Ausgestaltung als vorteilhaft herausgestellt, wenn sich mindestens der erste Umfangsbereich mit der Druckwandstärke und/oder mindestens der zweite Umfangsbereich mit mindestens der Stützwandstärke ausgehend von dem zweiten Anschlussbereich zumindest bis zu dem Niveau einer gedachten Verlängerung der Mittelachse des ersten Fluidkanals abzüglich des Radius des ersten Fluidkanalabschnitts erstrecken.

Stehen beispielsweise der erste Anschlussbereich und der zweite Anschlussbereich in einem Winkel α von 90° zueinander, erstreckt sich der Umfangsbereich mit der Druckwandstärke bzw. der Umfangsbereich mit der Stützwandstärke bis zu dem Niveau der innenliegenden Schnittkante des ersten Fluidkanalabschnitts und des zweiten Fluidkanalabschnitts.

Des Weiteren ist vorgesehen, dass sich der erste Umfangsbereich mit der Druckwandstärke und/oder der zweite Umfangsbereich mit mindestens der Stützwandstärke bis zu dem Niveau einer gedachten Verlängerung der Mittelachse des ersten Fluidkanals erstrecken. Folglich erstrecken sich die Bereiche mit der Druckwandstärke bzw. der Stützwandstärke weiter in den Übergangsbereich hinein, nämlich etwa bis auf das Niveau einer gedachten Verlängerung der Mittelachse des ersten Fluidkanalabschnitts. Durch diese Ausgestaltung können insbesondere die mechanischen Eigenschaften des Verbinders im Übergangsbereich verbessert und gleichzeitig der Querschnitt vergrößert werden.

Eine weitere Ausgestaltung des Verbinders sieht vor, dass der zweite Fluidkanalabschnitt zumindest eine Übergangsrundung aufweist, insbesondere dass die Übergangsrundung zwischen einem kreisförmigen Querschnitt und einem nicht-kreisförmigen Querschnitt angeordnet ist. Vorzugsweise bewirkt die Übergangsrundung eine Richtungsänderung der Fluidströmung, vorzugsweise um den Winkel α, innerhalb des zweiten Fluidkanalabschnitts. Ausgehend von einem in Richtung des ersten Fluidkanalabschnitts angeordneten kreisförmigen Querschnitt realisiert die Übergangsrundung den Übergang zu einem nicht-kreisförmigen Querschnitt des zweiten Fluidkanalabschnitts, der vorzugsweise in Richtung des dritten Fluidkanalabschnitts angeordnet ist. Beispielweise mündet die Übergangsrundung zumindest teilweise in einem Umfangsbereich mit Stützwandstärke.

Vorteilhaft ist gemäß einer weiteren Ausgestaltung vorgesehen, dass die Übergangsrundung quer zur Längserstreckung des ersten Fluidkanalabschnitts eine Erstreckung aufweist, die etwa dem Durchmesser des ersten Fluidkanalabschnitts entspricht oder vorzugsweise größer als der Durchmesser des ersten Fluidkanalabschnitts ist. Dadurch wird gewährleistet, dass das Fluid vorteilhaft umgelenkt wird. Zudem ist vorgesehen, dass ein Radius der Übergangsrundung in Verlängerung des ersten Fluidkanalabschnitts etwa dem Radius des ersten Fluidkanalabschnitts entspricht.

Gemäß einer weiteren Ausgestaltung des Verbinders ist vorgesehen, dass der zweite Fluidkanalabschnitt durch mindestens eine Planfläche begrenzt wird, bevorzugt dass die Planfläche derart angeordnet ist, dass die Mittelachse des ersten Fluidkanalabschnitts die Planfläche als Ebenennormale durchtritt.

Die Planfläche im Fluidkanal des Übergangsbereichs ist vorzugsweise dadurch realisiert, dass sich ein zweiter Umfangsbereich mit Stützwandstärke zumindest teilweise in den Übergangsbereich erstreckt.

Um vorteilhafte Durchflusseigenschaften im Fluidkanal zu gewährleisten, ist gemäß einer weiteren Ausgestaltung des Verbinders vorgesehen, dass der Querschnitt des dritten Fluidkanalabschnitts zumindest in dem ersten Teilabschnitt zwei gegenüberliegend und parallel zueinander angeordnete Geraden und zwei gegenüberliegend angeordnete, bogenförmige Segmente aufweist. Vorzugsweise sind die Geraden in den Bereichen mit der Stützwandstärke ausgebildet und die bogenförmigen Segmente in den Bereichen mit der Druckwandstärke. Beispielsweise sind die bogenförmigen Segmente konvex ausgebildet. Die bogenförmigen Segmente weisen vorzugsweise einen kurvenförmigen Verlauf auf oder einen Radius.

Bei einem Außendurchmesser des zweiten Anschlussbereichs zwischen 12 mm und 18 mm, insbesondere von etwa 12,5 mm, haben die Geraden eine Länge zwischen 6 mm und 8 mm, insbesondere von etwa 7 mm, und die bogenförmigen Segmente im Querschnitt einen Radius zwischen 4,25 mm und 5,25 mm, insbesondere von etwa 4,75 mm. Insbesondere beträgt der Außendurchmesser im Bereich einer O-Ring Nut etwa 12,5 mm und der größte Außendurchmesser etwa 16 mm.

Der Querschnitt des dritten Fluidkanalabschnitts - zumindest in dem ersten Teilabschnitt - ist vorzugsweise im Wesentlichen polygonal mit gerundeten Seitenkanten ausgebildet. Dieser Querschnitt gewährleistet eine ausreichende Durchflussmenge bei gleichzeitig stabiler mechanischer Dimensionierung sowie kreisförmiger Außenkontur.

Gemäß einer weiteren Ausgestaltung des Verbinders kann durch die erfindungsgemäße Gestaltung der Wandstärken in den Umfangsbereichen die Fläche des Querschnitts des Fluidkanals im dritten Fluidkanalabschnitt derart ausgebildet werden, dass sie zumindest in dem ersten Teilabschnitt größer als die Fläche des Querschnitts des Fluidkanals im ersten Fluidkanalabschnitt ist. Durch die über die unterschiedlichen Wandstärken realisierte, optimierte Querschnittsform wird eine größere Fläche des Querschnitts des Fluidkanals im dritten Fluidkanalabschnitt erreicht, die eine ausreichende Durchflussmenge sicherstellt. In den Umfangsbereichen mit der Druckwandstärke wird der Querschnitt gegenüber einem bekannten, kreisförmigen Querschnitt mit einer für alle Belastungen ausreichenden Wandstärke vergrößert, in den Umfangsbereichen mit der Stützwandstärke konstant gehalten oder geringfügig eingeschränkt.

Gemäß einer weiteren Ausgestaltung hat sich zudem als vorteilhaft herausgestellt, wenn vorgesehen ist, dass sich der erste Teilabschnitt des dritten Fluidkanalabschnitts über etwa ein Drittel bis zur Hälfte der Erstreckung der Mittelachse des dritten Fluidkanalabschnitts erstreckt.

Um die Gestaltung des Verbinders weiter zu optimieren, ist vorgesehen, das zumindest auf einem Außenumfang des zweiten Anschlussbereichs mindestens eine Fluiddichtung zur Abdichtung gegenüber einem Betriebsdruck in dem Verbinder angeordnet ist. Der erste Teilabschnitt erstreckt sich dabei bevorzugt zumindest zwischen dem Übergangsbereich und der Fluiddichtung. Im ersten Teilabschnitt ist die Druckwandstärke vorzugsweise derart dimensioniert, dass sie dem Betriebsdruck innerhalb des Verbinders standhält. Die Stützwandstärke ist vorzugsweise so dimensioniert, dass die mechanische Belastung getragen wird. Eine derartige Gestaltung des ersten Teilabschnitts erfolgt zumindest bis zu der Fluiddichtung, insbesondere bis zu einer von dem Übergangsbereich abgewandten Kante einer Nut für die Fluiddichtung. So wird sichergestellt, dass die Wand des zweiten Anschlussbereichs für die auftretenden Belastungen ausreichend dimensioniert ist.

Auf der von dem Übergangsbereich abgewandten Seite der Fluiddichtung müssen lediglich mechanische Belastungen getragen werden, da der Fluiddruck von beiden Seiten an der den dritten Fluidkanalabschnitt umgebenden Wand anliegt. Eine Dimensionierung unter Heranziehung des Berstdruckes ist nicht mehr erforderlich.

Vorzugsweise ist gemäß einer weiteren Ausgestaltung vorgesehen, dass sich auf der von dem Übergangsbereich abgewandten Seite des ersten Teilabschnitts ein zweiter Teilabschnitt des zweiten Anschlussbereichs erstreckt, und dass der dritte Fluidkanalabschnitt im zweiten Teilabschnitt einen von einer Kreisform abweichenden Querschnitt aufweist. Die den dritten Fluidkanalabschnitt im zweiten Teilabschnitt umgebende Wand weist mindestens einen die Ebene E schneidenden, zweiten Umfangsbereich mit der Stützwandstärke auf. Des Weiteren ist vorgesehen, dass sich die Stützwandstärke in dem die Ebene E schneidenden Umfangsbereich und/oder sich die Erstreckung des Umfangsbereichs über den Gesamtumfang in Richtung eines von dem Übergangsbereich abgewandten Endbereichs des zweiten Anschlussbereichs stetig reduziert. Die Stützwandstärke und/oder ihre Erstreckung über den Gesamtumfang im zweiten Teilabschnitt nimmt folglich, insbesondere in dem die Ebene E schneidenden Umfangsbereich, in Richtung des Endbereichs ab. Die mechanischen Belastungen im Betrieb gehen in Richtung des von dem Übergangsbereich abgewandten Endbereichs zurück, so dass auch die Stützwandstärke in Richtung des Endbereichs reduziert werden kann.

Um eine Kompatibilität des Verbinders mit bestehenden Systemen zu gewährleisten, ist gemäß einer weiteren Ausgestaltung vorgesehen, dass der Querschnitt des dritten Fluidkanalabschnitts in dem zweiten Teilabschnitt unter Veränderung der Wandstärke, insbesondere unter Reduzierung der Stützwandstärke und/oder der Erstreckung des Umfangsbereichs über den Gesamtumfang, von einem nicht-kreisförmigen Querschnitt auf einen kreisförmigen Querschnitt im vom Übergangsbereich abgewandten Endbereich des zweiten Anschlussabschnitts übergeht. Dadurch wird gewährleistet, dass im Endbereich des zweiten Anschlussbereichs ein kreisförmiger Querschnitt des Fluidkanals vorliegt.

Besonders vorteilhaft ist gemäß einer weiteren Ausgestaltung des Verbinders vorgesehen, dass der zweite Anschlussbereich als Anschlussdorn zum Einbringen einer Rohr- oder Schlauchleitung und/oder der zweite Anschlussbereich als Anschlussstecker, insbesondere zum Anschluss an ein Aggregat, ausgebildet ist. Der erste Anschlussbereich ist vorzugsweise als Anschlussdorn mit kreisförmiger Außenkontur ausgebildet, die dem Einstecken in eine Rohr- oder Schlauchleitung dient. Der zweite Anschlussbereich ist als Anschlussstecker ausgebildet und kann in eine kompatible Steckbuchse eingesteckt werden.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Verbinders in Seitenansicht,
- Fig. 2: ein Ausführungsbeispiel eines Verbinders in geschnittener Ansicht, montiert in einer Überwurfschraube,
- Fig. 3a: einen Schnitt durch ein Ausführungsbeispiel eines zweiten Anschlussbereichs,
- Fig. 3b: einen Querschnitt durch den zweiten Anschlussbereich gemäß Fig. 3a,
- Fig. 3c: einen Querschnitt durch den zweiten Anschlussbereich gemäß Fig. 3a,
- Fig. 4a, Fig. 4b: ein Ausführungsbeispiel eines Querschnittsverlaufs des Fluidkanals,
- Fig. 5a: ein Ausführungsbeispiel eines Querschnittsverlaufs eines Fluidkanals,
- Fig. 5b: ein Ausführungsbeispiel eines Verbinders zu dem Querschnittsverlauf der Fig. 5a,
- Fig. 6a: ein Ausführungsbeispiel eines Querschnittsverlaufs eines Fluidkanals,
- Fig. 6b: ein Ausführungsbeispiel eines Verbinders zu dem Querschnittsverlauf der Fig. 6a,
- Fig. 7a: ein Ausführungsbeispiel eines Querschnittsverlaufs eines Fluidkanals,
- Fig. 7b: ein Ausführungsbeispiel eines Verbinders zu dem Querschnittsverlauf der Fig. 7a,
- Fig. 8a: ein Ausführungsbeispiel eines Querschnittsverlaufs eines Fluidkanals, und
- Fig. 8b: ein Ausführungsbeispiel eines Verbinders zu dem Querschnittsverlauf der Fig. 8a.

**In** den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

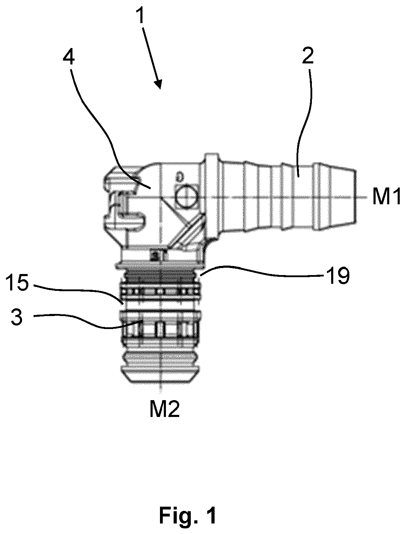

Fig. 1 zeigt ein Ausführungsbeispiel eines Verbinders 1 für Fluidleitungen. Der Verbinder 1 weist einen ersten Anschlussbereich 2, einen zweiten Anschlussbereich 3 sowie einen Übergangsbereich 4 auf. Bei diesem Ausführungsbeispiel ist der Übergangsbereich 4 zwischen dem ersten Anschlussbereich 2 und dem zweiten Anschlussbereich 3 ausgebildet. Der erste Anschlussbereich 2 ist als Anschlussdorn für eine Rohr- oder Schlauchleitung ausgebildet, der zweite Anschlussbereich 3 ist als Anschlussstecker mit einer kreisförmigen Außenkontur ausgebildet.

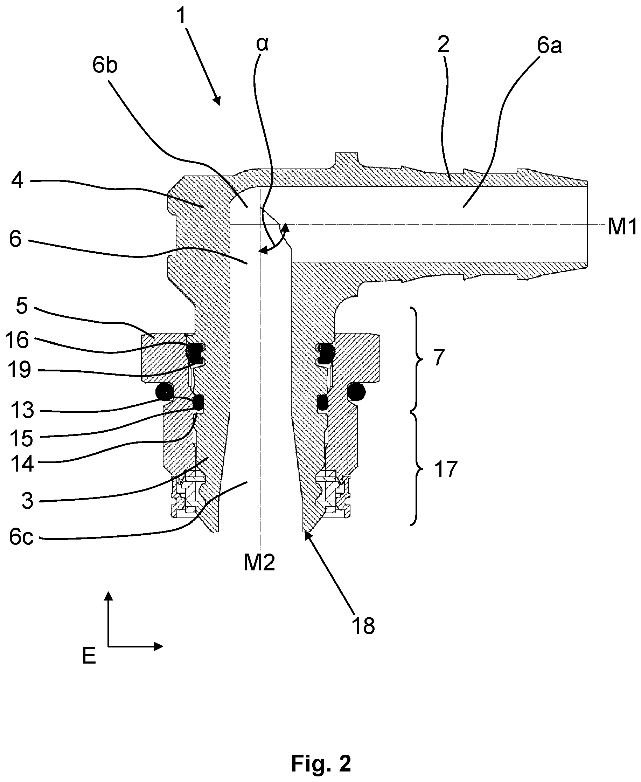

Fig. 2 zeigt ein Ausführungsbeispiel eines Verbinders 1 in einer Schnittansicht. Das Ausführungsbeispiel gemäß Fig. 2 ist gemäß dem Ausführungsbeispiel in Fig. 1 ausgebildet. Der Verbinder 1 ist beispielhaft mit dem zweiten Anschlussbereich 3 in eine korrespondierende Steckbuchse 5, insbesondere eine Überwurfschraube, eingebracht. Der Verbinder 1 weist einen Fluidkanal 6 auf, der einen ersten Fluidkanalabschnitt 6a im ersten Anschlussbereich 2, einen zweiten Fluidkanalabschnitt 6b im Übergangsbereich 4 und einen dritten Fluidkanalabschnitt 6c im zweiten Anschlussbereich 3 aufweist.

Bei den Ausführungsbeispielen der Fig. 1 und Fig. 2 sind der erste Anschlussbereich 2 und der zweite Anschlussbereich 3 in einem Winkel α von 90° zueinander angeordnet. Die Mittelachse M1 des ersten Fluidkanalabschnitts 6a und die Mittelachse M2 des dritten Fluidkanalabschnitts 6c definieren eine - gedachte - Ebene E. Der Schnitt gemäß Fig. 2 ist in der Ebene E geführt.

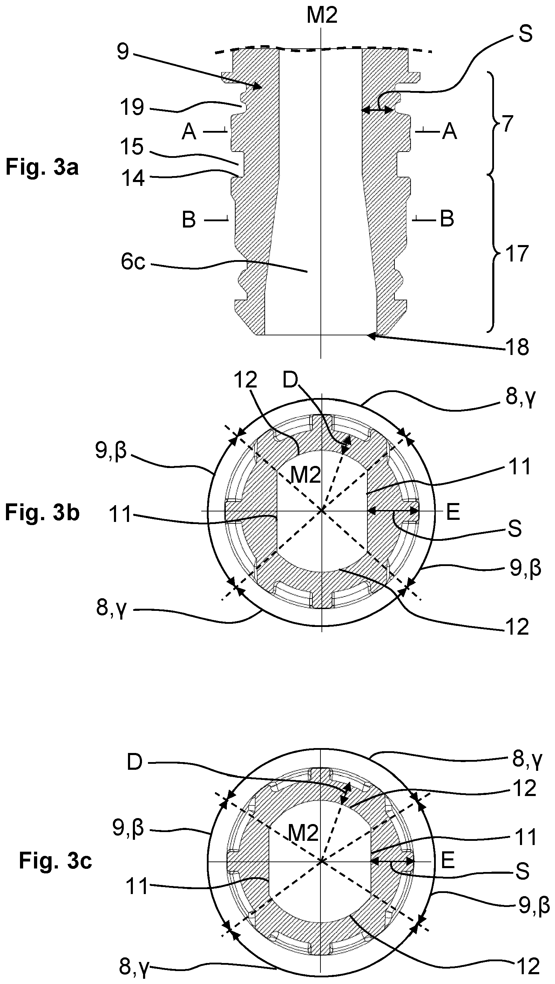

Fig. 3a zeigt den zweiten Anschlussbereich 3 eines Ausführungsbeispiels eines Verbinders 1 gemäß den Ausführungsbeispielen der Fig. 1 und Fig. 2. Fig. 3b zeigt einen senkrechten Schnitt in dem zweiten Anschlussbereich 3 gemäß Fig. 3a entlang der Linie A-A und Fig. 3c zeigt einen Schnitt in dem zweiten Anschlussbereich 3 gemäß Fig. 3a entlang der Linie B-B.

Gemäß Fig.2, Fig. 3a und Fig. 3b weist der dritte Fluidkanalabschnitt 6c im zweiten Anschlussbereich 3 zumindest in einem ersten Teilabschnitt 7 des dritten Fluidkanalabschnitts 6c einen von einer Kreisform abweichenden Querschnitt auf. Insbesondere gemäß Fig. 3b ist eine den dritten Fluidkanalabschnitt 6c in dem ersten Teilabschnitt 7 umgebende Wand in zwei außerhalb der Ebene E angeordneten, ersten Umfangbereichen 8 mit einer Druckwandstärke D ausgebildet. Ferner ist die den dritten Fluidkanalabschnitt 6c in dem ersten Teilabschnitt 7 umgebende Wand in zwei die Ebene E schneidenden, zweiten Umfangsbereichen 9 mit einer gegenüber der Druckwandstärke D vergrößerten Stützwandstärke S ausgebildet.

Gemäß Fig. 3b ist in den ersten Umfangsbereichen 8 die Druckwandstärke D ausgebildet, die auf Basis eines Berstdruckes, unter Berücksichtigung eines Materials des Verbinders 1 und des maximalen Betriebsdrucks in dem Verbinder, insbesondere zuzüglich eines Sicherheitszuschlags, dimensioniert ist. Die Druckwandstärke D stellt folglich eine Mindestwandstärke, resultierend aus dem maximalen Betriebsdruck, dar. In den zweiten Umfangsbereichen 9 ist die Wandstärke gegenüber der Druckwandstärke D vergrößert ausgebildet, nämlich mit einer Stützwandstärke S. Die Stützwandstärke S ist in dem zweiten Umfangsbereich 9 über den Verlauf des Umfangs nicht konstant, sondern weist in der Ebene E ein Maximum auf. Mit zunehmendem Abstand in Normalenrichtung zur Ebene E nimmt die Stützwandstärke S ab, bis der zweite Umfangsbereich 9 in den ersten Umfangsbereich 8 mit der Stützwandstärke S übergeht.

Die ersten Umfangsbereiche 8 mit der Druckwandstärke D sind gegenüberliegend auf dem Umfang des in Fig. 3b dargestellten Querschnitts angeordnet. Gleichermaßen sind die zweiten Umfangsbereiche 9 mit der Stützwandstärke S auf dem Umfang gegenüberliegend zueinander angeordnet.

Wie aus Fig. 2 und Fig. 3a ersichtlich, ist der erste Teilabschnitt 7 unmittelbar angrenzend an den Übergangsbereich 4 ausgebildet. Gemäß Fig. 2 ist der Querschnitt in dem ersten Fluidkanalabschnitt 6a kreisförmig ausgebildet und geht im Verlauf des zweiten Fluidkanalabschnitts 6b in einen nicht-kreisförmigen Querschnitt über.

Die Erfindung kann gemäß Fig. 3b alternativ folgendermaßen betrachtet werden: Ausgehend von der Ebene E erstrecken sich die zweiten Umfangsbereiche 9 im Querschnitt beidseits der Ebene E gleichmäßig innerhalb eines Winkels β. Der Winkel β beträgt im zweiten Teilabschnitt 7 insbesondere etwa zwischen 80° und 90°, so dass sich ausgehend von der Ebene E beidseits ein Winkel zwischen 40° und 45° ergibt. Die ersten Umfangsbereiche 8 erstrecken sich außerhalb der Ebene E in den verbleibenden Umfangsbereichen 8 des Querschnitts in einem Winkel γ, der sich mittels der Formel (360°-(2*β)) / 2 berechnen lässt.

Wie sich aus Fig. 3b ergibt, reduziert sich in einem zweiten Teilabschnitt 17 im Querschnitt sowohl die Stützwandstärke S als auch die Erstreckung des zweiten Umfangsbereichs 9 über den Gesamtumfang, so dass die Winkel β und die Stützwandstärke S im zweiten Teilabschnitt in Richtung eines Endbereichs 18 des zweiten Anschlussbereichs 3 kontinuierlich abnehmen. Dort wo ein erster Umfangsbereich 8 an einen zweiten Umfangsbereich 9 angrenzt, ist die Stützwandstärke S bei diesem Ausführungsbeispiel größer als die Druckwandstärke D. Es ist allerdings auch vorgesehen, dass die Stützwandstärke S in diesem Bereich mindestens der Druckwandstärke D entspricht, insbesondere gleich groß ist.

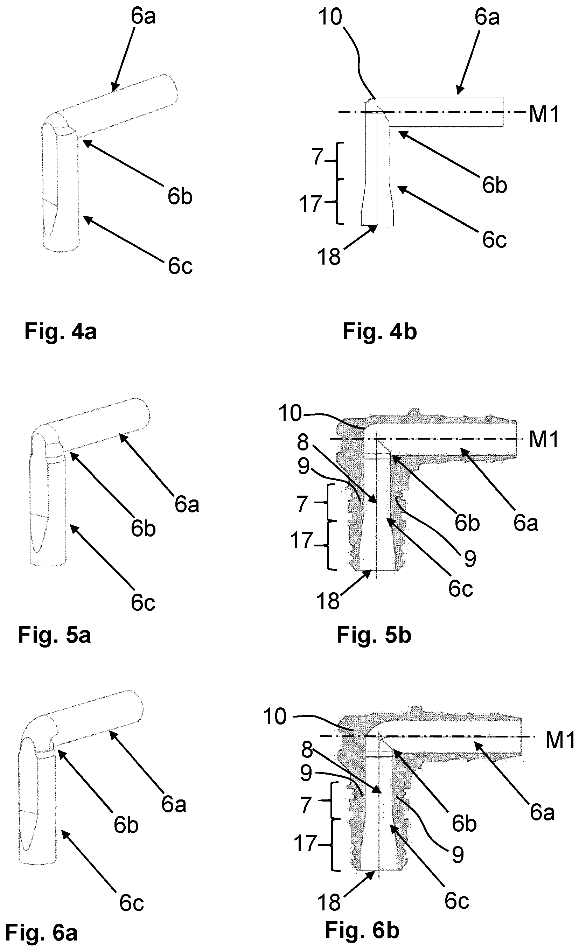

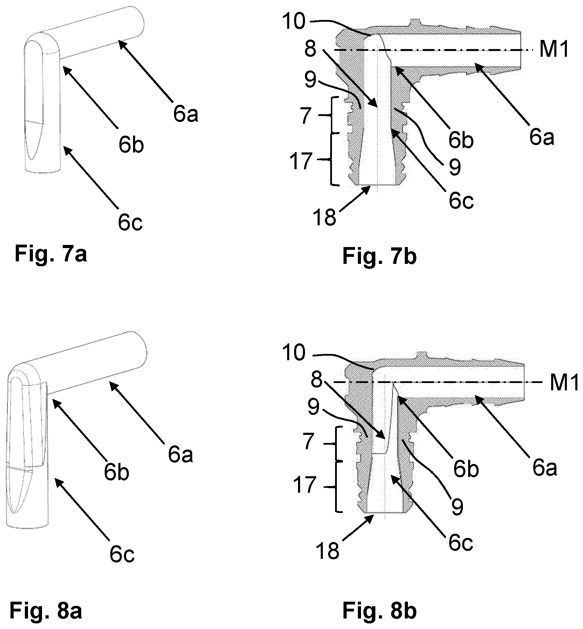

Fig. 4 a bis Fig. 8 a und Fig. 4b zeigen beispielhaft Querschnittsverläufe des Fluidkanals 6 im Verlauf zwischen dem ersten Anschlussbereich 2, dem Übergangsbereich 4 und dem zweiten Anschlussbereich 3. Fig. 4a bis Fig. 8a und Fig. 4b zeigen somit Abbilder bzw. ein Negativ des Querschnitts des Fluidkanals 6 entlang seiner Erstreckung. Die in Fig. 4a bis Fig. 8a dargestellten Querschnittsverläufe sind, insbesondere im Übergangsbereich 4 und im zweiten Anschlussbereich 3, das Ergebnis aus der Dimensionierung der Wandstärken im Übergangsbereich 4 und dem zweiten Anschlussbereich 3. Anhand der Querschnittsverläufe lässt sich die Dimensionierung der Wandstärken des Verbinders vorteilhaft beschreiben.

Fig. 5b bis Fig. 8b zeigen Ausführungsbeispiele von Verbindern 1 in Schnittansicht zu den jeweils in Fig. 5a bis Fig. 8a dargestellten Querschnittsverläufen.

Bei allen Ausführungsbeispielen der Fig. 4a,b bis Fig. 8a,b ist der Querschnitt des ersten Fluidkanalabschnitts 6a über seinen gesamten Verlauf kreisförmig mit einem konstanten Radius ausgebildet. Ferner ist der Querschnitt des zweiten Fluidkanalabschnitts 6b bei allen Ausführungsbeispielen, ausgehend von dem ersten Fluidkanalabschnitt 6a, ebenfalls zunächst kreisförmig.

Bei den Ausführungsbeispielen der Fig. 4a,b bis Fig. 6a,b erfolgt der Übergang von dem kreisförmigen Querschnitt auf den nicht-kreisförmigen Querschnitt innerhalb des zweiten Fluidkanalabschnitts 6b in einem Winkel von etwa 45°. Bei dem Ausführungsbeispiel der Fig. 7a,b beträgt der Winkel etwa 20°. Bei dem Ausführungsbeispiel Fig. 8a,b entspricht der Winkel etwa dem Winkel α von 90°.

Bei dem Ausführungsbeispiel der Fig. 4a,b erstrecken sich bei einem zugehörigen Verbinder 1 - nicht dargestellt - zwei gegenüberliegend angeordnete erste Umfangsbereiche 8 mit der Druckwandstärke D ausgehend von dem zweiten Anschlussbereich 3 in den Übergangsbereich 4 etwa bis zu dem Niveau einer gedachten Verlängerung der Mittelachse M1 des ersten Fluidkanalabschnitts 6a, erkennbar an der abgesetzten Querschnittserweiterung (siehe insbesondere Fig. 4b). Ferner erstreckt sich ein zweiter Umfangsbereich 9 mit der Stützwandstärke S ebenfalls bis etwa zu dem Niveau einer gedachten Verlängerung der Mittelachse M1 des ersten Fluidkanalabschnitts 6a, was an dem abgeflachten Querschnitt des Fluidkanals 6, insbesondere im zweiten Fluidkanalabschnitt 6b und dritten Fluidkanalabschnitt 6c, zu erkennen ist.

Bei den Ausführungsbeispielen der Fig. 5a,b und Fig. 6a,b erstrecken sich bei einem zugehörigen Verbinder 1 - gemäß Fig. 5b und Fig. 6b - zwei gegenüberliegend angeordnete erste Umfangsbereiche 8 in den Übergangsbereich 4 bis etwa zu dem Niveau einer gedachten Verlängerung der Mittelachse M1 des ersten Fluidkanalabschnitts 6a abzüglich des Radius des ersten Fluidkanalabschnitts 6a, erkennbar an der abgesetzten Querschnittsveränderung auf diesem Niveau (siehe insbesondere Fig. 5a und Fig. 6a). Ferner erstreckt sich ein zweiter Umfangsbereich 9 bis zur gedachten Verlängerung der Mittelachse M1 abzüglich des Radius des ersten Fluidkanalabschnitts 6a und ein weiterer zweiter Umfangsbereich 9 in den Übergangsbereich 4 bis etwa zu einer gedachten Verlängerung der Mittelachse M1, erkennbar an dem abgeflachten Profil des Querschnitts.

Bei allen Ausführungsbeispielen der Fig. 4a,b bis Fig. 8a,b weist der Verbinder 1 - dargestellt in Fig. 5b bis Fig. 8b - eine Übergangsrundung 10 auf, die in einem entsprechenden Querschnittsverlauf resultiert. Bei den Ausführungsbeispielen der Fig. 4a,b, 5a,b, 6a,b und 8a,b weist die Übergangsrundung 10 quer zur Längserstreckung des ersten Fluidkanalabschnitts 6a eine Erstreckung auf, die in etwa dem Durchmesser des ersten Fluidkanalabschnitts 6a entspricht.

Bei dem Ausführungsbeispiel der Fig. 7a,b weist die Übergangsrundung 10 quer zur Längserstreckung des ersten Fluidkanalabschnitts 6a eine Erstreckung auf, die größer als der Durchmesser des ersten Fluidkanalabschnitts 6a ist.

Bei allen Ausführungsbeispielen entspricht der Radius der Übergangsrundung 10 in Verlängerung des ersten Fluidkanalabschnitts 6a etwa dem Radius des ersten Fluidkanalabschnitts 6a. Bei dem Ausführungsbeispiel der Fig. 6a,b ist der von der Übergangsrundung 10 überstrichene Kreisbogen größer als bei den Ausführungsbeispielen der Fig. 4a,b, 5a,b, 7a,b, 8a,b.

Bei allen Ausführungsbeispielen der Fig. 4a,b bis 8a,b ist vorgesehen, dass der zweite Fluidkanalabschnitt 6b durch mindestens eine Planfläche begrenzt wird, was im Ergebnis aus der Verlängerung eines der zweiten Umfangsbereiche 9 mit der Stützwandstärke S in den Übergangsbereich 4 resultiert. In den Fig. 4a,b bis Fig. 8a,b ist das als Abflachung des Querschnitts im Übergangsbereich 4 zu erkennen. Zumindest im ersten Teilabschnitt 7 des dritten Fluidkanalabschnitts 6c weist der Querschnitt bei allen Ausführungsbeispielen gemäß Fig. 4a,b bis Fig. 8a,b - wie beispielhaft in Fig. 3b dargestellt - zwei gegenüberliegend und parallel zueinander angeordnete Geraden 11 sowie zwei gegenüberliegend angeordnete, bogenförmige Segmente 12 auf, die die Geraden 11 im Querschnitt miteinander verbinden. Der jeweils resultierende Querschnitt ist den Fig. 4a,b bis Fig. 8a,b beispielhaft zu entnehmen.

Der erste Teilabschnitt 7 des dritten Fluidkanalabschnitts 6c erstreckt sich bei allen Ausführungsbeispielen der Fig. 4a,b bis Fig. 8a,b über etwa ein Drittel der Erstreckung der Mittelachse M2 des dritten Fluidkanalabschnitts 6c.

Gemäß Fig. 2 ist auf einem Außenumfang des zweiten Anschlussbereichs 3 eine Fluiddichtung 13 zur Abdichtung gegenüber dem Betriebsdruck in dem Verbinder 1 angeordnet. Der erste Teilabschnitt 7 erstreckt sich vorzugsweise bis zu einer von dem Übergangsbereich 4 abgewandten Kante 14 einer Nut 15 für die Fluiddichtung 13. Der Verbinder 1 weist zusätzlich eine Schmutzdichtung 16 auf, die in einer Nut 19 angeordnet ist. Zwischen der von dem Übergangsbereich 4 abgewandten Kante 14 der Nut 15 und dem von dem Übergangsbereich 4 abgewandten Endbereich 18 ist ein zweiter Teilabschnitt 17 des zweiten Anschlussbereichs 3 angeordnet. In dem zweiten Teilabschnitt 17 verändert sich der nicht-kreisförmige Querschnitt unter Reduzierung der Wandstärke, insbesondere der Stützwandstärke S, auf einen kreisförmigen Querschnitt im Endbereich 18.

Insbesondere Fig. 3a ist zu entnehmen, dass die Reduzierung der Wandstärke unmittelbar im Bereich der Kante 14 der Nut 15 beginnt. Dem Vergleich der Fig. 3b und 3c ist zu entnehmen, dass die Stützwandstärke S gemäß Fig. 3c bereits deutlich reduziert ist und sich auch über einen vergleichsweise kleineren Umfangsbereich 9 erstreckt.

Gemäß Fig. 3a ist die Stelle mit der dünnsten Wandstärke im dritten Fluidkanalabschnitt 6c in einem zweiten Umfangsbereich 9 in Nutgrund der Nut 19 ausgebildet. Die dort vorhandene Stützwandstärke S ist größer als die Druckwandstärke D ausgebildet.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Verbinder
- 2: Erster Anschlussbereich
- 3: Zweiter Anschlussbereich
- 4: Übergangsbereich
- 5: Steckbuchse
- 6: Fluidkanal
- 6a: Erster Fluidkanalabschnitt
- 6b: Zweiter Fluidkanalabschnitt
- 6c: Dritter Fluidkanalabschnitt
- 7: Erster Teilabschnitt
- 8: Erster Umfangsbereich
- 9: Zweiter Umfangsbereich
- 10: Übergangsrundung
- 11: Gerade
- 12: Bogenförmiges Segment
- 13: Fluiddichtung
- 14: Kante
- 15: Nut für 13
- 16: Schmutzdichtung
- 17: Zweiter Teilabschnitt
- 18: Endbereich
- 19: Nut für 16
- M1: Mittelachse von 6a
- M2: Mittelachse von 6c
- A-A: Schnittlinie
- B-B: Schnittlinie
- D: Druckwandstärke
- S: Stützwandstärke

## Patentansprüche

1. Verbinder (1) für Fluidleitungen, mit mindestens einem ersten Anschlussbereich (2), mindestens einem zweiten Anschlussbereich (3), einem Übergangsbereich (4) und einem Fluidkanal (6), wobei der Übergangsbereich (4) zwischen dem ersten Anschlussbereich (2) und dem zweiten Anschlussbereich (3) ausgebildet ist, wobei der erste Anschlussbereich (2) einen ersten Fluidkanalabschnitt (6a), der Übergangsbereich (4) einen zweiten Fluidkanalabschnitt (6b) und der zweite Anschlussbereich (3) einen dritten Fluidkanalabschnitt (6c) des Fluidkanals (6) aufweist,
wobei der erste Anschlussbereich (2) und der zweite Anschlussbereich (3) in einem Winkel (α) zueinander angeordnet sind, wobei der Winkel (α) kleiner als 180° ist, wobei die Mittelachsen (M1, M2) des ersten Fluidkanalabschnitts (6a) und des dritten Fluidkanalabschnitts (6c) eine Ebene E definieren, und wobei der zweite Anschlussbereich (3) eine im Wesentlichen kreisförmige Außenkontur aufweist, wobei der dritte Fluidkanalabschnitt (6c) zumindest in einem ersten Teilabschnitt (7) einen von einer Kreisform abweichenden Querschnitt aufweist,
wobei eine den dritten Fluidkanalabschnitt (6c) zumindest in dem ersten Teilabschnitt (7) umgebende Wand mindestens einen außerhalb der Ebene E angeordneten ersten Umfangsbereich (8) mit einer Druckwandstärke (D) aufweist,
und wobei die den dritten Fluidkanalabschnitt (6c) zumindest in dem ersten Teilabschnitt (6c) umgebende Wand mindestens einen die Ebene E schneidenden, zweiten Umfangsbereich (9) mit einer gegenüber der Druckwandstärke (D) vergrößerten Stützwandstärke (S) aufweist,
**dadurch gekennzeichnet, dass**
der Verbinder (1) einstückig aus einem Kunststoff ausgebildet ist, dass die den dritten Fluidkanalabschnitt (6c) zumindest in dem ersten Teilabschnitt (7) umgebende Wand mindestens zwei gegenüberliegend zueinander und außerhalb der Ebene E angeordnete, erste Umfangsbereiche (8) mit der Druckwandstärke (D) aufweist, und
dass die den dritten Fluidkanalabschnitt (7) zumindest in dem ersten Teilabschnitt (7) umgebende Wand mindestens zwei gegenüberliegend zueinander angeordnete, die Ebene E schneidende, zweite Umfangsbereiche (9) mit mindestens der Stützwandstärke (S) aufweist.

2. Verbinder (1) nach Anspruch 1,
**dadurch gekennzeichnet, dass**
die Druckwandstärke (D) auf Basis eines Berstdruckes, unter Berücksichtigung eines Materials des Verbinders (1) und eines maximalen Betriebsdrucks in dem Verbinder (1), dimensioniert ist, insbesondere ist die Druckwandstärke so dimensioniert, dass sie im Temperaturbereich zwischen 15 °C und 25 °C dem Vierfachen eines maximalen Betriebsdruckes standhält.

3. Verbinder (1) nach Anspruch 1 oder 2,
**dadurch gekennzeichnet, dass**
die Stützwandstärke (S) auf Basis einer maximal auftretenden mechanischen, insbesondere nicht aus einem Betriebsdruck resultierenden, Belastung in dem ersten Teilabschnitt (7), insbesondere Biegung mit einer Komponente in der Ebene E, dimensioniert ist.

4. Verbinder (1) nach einem der Ansprüche 1 bis 3,
**dadurch gekennzeichnet, dass**
der erste Teilabschnitt (7) an den Übergangsbereich (4) angrenzend ausgebildet ist.

5. Verbinder (1) nach einem der Ansprüche 1 bis 4,
**dadurch gekennzeichnet, dass**
der Querschnitt des ersten Fluidkanalabschnitts (6a) kreisförmig ausgebildet ist, und dass der Querschnitt des zweiten Fluidkanalabschnitts (6b) zumindest teilweise nicht-kreisförmig ausgebildet ist, insbesondere dass im Übergangsbereich (4) ein Übergang von einem kreisförmigen Querschnitt auf einen nicht-kreisförmigen Querschnitt im Winkel (α) erfolgt.

6. Verbinder (1) nach einem der Ansprüche 1 bis 5,
**dadurch gekennzeichnet, dass**
sich mindestens der erste Umfangsbereich (8) mit der Druckwandstärke (D) und/oder mindestens der zweite Umfangsbereich (9) mit mindestens der Stützwandstärke (S), ausgehend von dem zweiten Anschlussbereich (3), zumindest teilweise in den Übergangsbereich (4) erstreckt, insbesondere dass sich mindestens der erste Umfangsbereich (8) mit der Druckwandstärke (D) und/oder mindestens der zweite Umfangsbereich (9) mit mindestens der Stützwandstärke (S) ausgehend von dem zweiten Anschlussbereich (3) zumindest bis zu dem Niveau einer gedachten Verlängerung der Mittelachse (M1) des ersten Fluidkanalabschnitts (6a) abzüglich eines Radius des ersten Fluidkanalabschnitts (6a) erstrecken, bevorzugt zumindest bis zu dem Niveau einer gedachten Verlängerung der Mittelachse (M1) des ersten Fluidkanalabschnitts (6a) erstrecken.

7. Verbinder (1) nach einem der Ansprüche 1 bis 6,
**dadurch gekennzeichnet, dass**
der zweite Fluidkanalabschnitt (6b) mindestens eine Übergangsrundung (10) aufweist, insbesondere dass die Übergangsrundung (10) zwischen einem kreisförmigen Querschnitt und einem nicht-kreisförmigen Querschnitt, insbesondere im zweiten Fluidkanalabschnitt (6b), angeordnet ist, insbesondere dass die Übergangsrundung (10) quer zur Längserstreckung des ersten Fluidkanalabschnitts (6a) eine Erstreckung aufweist, die etwa dem Durchmesser des ersten Fluidkanalabschnitts (6a) entspricht oder größer als der Durchmesser des ersten Fluidkanalabschnitts (6a) ist und/oder dass ein in Verlängerung des ersten Fluidkanalabschnitts (6a) orientierter Radius der Übergangsrundung (10) etwa einem Radius des ersten Fluidkanalabschnitts (6a) entspricht.

8. Verbinder (1) nach einem der Ansprüche 1 bis 7,
**dadurch gekennzeichnet, dass**
der zweite Fluidkanalabschnitt (6b) durch mindestens eine Planfläche begrenzt wird, bevorzugt dass die Planfläche derart angeordnet ist, dass die Mittelachse (M1) des ersten Fluidkanalabschnitts (6a) die Planfläche als Normale durchtritt.

9. Verbinder (1) nach einem der Ansprüche 1 bis 8,
**dadurch gekennzeichnet, dass**
der Querschnitt des dritten Fluidkanalabschnitts (6c) zumindest in dem ersten Teilabschnitt (7) zwei gegenüberliegend und parallel zueinander angeordnete Geraden (11) und zwei gegenüberliegend angeordnete, bogenförmige Segmente (12) aufweist, bevorzugt dass die bogenförmigen Segmente (12) konvex ausgebildet sind, besonders bevorzugt einen kurvenförmigen Verlauf oder einen Radius aufweisen.

10. Verbinder (1) nach einem der Ansprüche 1 bis 9,
**dadurch gekennzeichnet, dass**
die Fläche des Querschnitts des Fluidkanals (6) zumindest in dem ersten Teilabschnitt (7) größer als die Fläche des Querschnitts des Fluidkanals (6) im ersten Fluidkanalabschnitt (6a) ist und/oder dass sich der erste Teilabschnitt (7) des dritten Fluidkanalabschnitts (6c) über etwa ein Drittel bis zur Hälfte der Erstreckung der Mittelachse (M2) des dritten Fluidkanalabschnitts (6c) erstreckt.

11. Verbinder (1) nach einem der Ansprüche 1 bis 10,
**dadurch gekennzeichnet, dass**
zumindest auf einem Außenumfang des zweiten Anschlussbereichs (3) mindestens eine Fluiddichtung (13) zur Abdichtung gegenüber einem Betriebsdruck in dem Verbinder (1) angeordnet ist, bevorzugt dass sich der erste Teilabschnitt (7) zumindest zwischen dem Übergangsbereich (4) und der Fluiddichtung (13) erstreckt, insbesondere bis zu einer von dem Übergangsbereich (4) abgewandten Kante (14) einer Nut (15) für die Fluiddichtung (13).

12. Verbinder (1) nach einem der Ansprüche 1 bis 11,
**dadurch gekennzeichnet, dass**
sich auf der von dem Übergangsbereich (4) abgewandten Seite des ersten Teilabschnitts (7) ein zweiter Teilabschnitt (17) des zweiten Anschlussbereichs (3) erstreckt, dass der dritte Fluidkanalabschnitt (6c) im zweiten Teilabschnitt (7) einen von einer Kreisform abweichenden Querschnitt aufweist, dass zumindest die den dritten Fluidkanalabschnitt (6c) in dem zweiten Teilabschnitt (7) umgebende Wand mindestens einen die Ebene E schneidenden, zweiten Umfangsbereich (9) mit der Stützwandstärke (S) aufweist, und dass sich die Stützwandstärke (S) in dem die Ebene E schneidenden Umfangsbereich (9) und/oder die Erstreckung des Umfangsbereichs (9) auf dem Gesamtumfang im Verlauf in Richtung eines von dem Übergangsbereich (4) abgewandten Endbereichs (18) stetig reduziert.

13. Verbinder (1) nach Anspruch 12,
**dadurch gekennzeichnet, dass**
der Querschnitt des Fluidkanals (6) im zweiten Teilabschnitt (17) unter Reduzierung zumindest der Stützwandstärke (S) und/oder der Erstreckung des Umfangsbereichs (9) auf dem Gesamtumfang von einem nicht-kreisförmigen Querschnitt auf einen kreisförmigen Querschnitt im Endbereich (18) des zweiten Anschlussbereichs (3) übergeht.

14. Verbinder (1) nach einem der Ansprüche 1 bis 13,
**dadurch gekennzeichnet, dass**
der Querschnitt des Fluidkanals (6) zumindest in einem von dem Übergangsbereich (4) abgewandten Endbereich (18) des zweiten Anschlussbereichs (3) kreisförmig ausgebildet ist.

15. Verbinder (1) nach einem der Ansprüche 1 bis 14,
**dadurch gekennzeichnet, dass**
der erste Anschlussbereich (2) als Anschlussdorn zum Einbringen in eine Rohr- oder Schlauchleitung und/oder der zweite Anschlussbereich (3) als Anschlussstecker ausgebildet ist.

## Claims

1. Connector (1) for fluid lines, having at least one first connection area (2), at least one second connection area (3), a transition area (4) and a fluid channel (6), the transition area (4) being formed between the first connection area (2) and the second connection area (3), the first connection area (2) having a first fluid channel section (6a), the transition area (4) having a second fluid channel section (6b) and the second connection area (3) having a third fluid channel section (6c) of the fluid channel (6),
wherein the first connection area (2) and the second connection area (3) are arranged at an angle (α) to one another, wherein the angle (α) is less than 180°, wherein the central axes (M1, M2) of the first fluid channel section (6a) and of the third fluid channel section (6c) define a plane E, and wherein the second connection area (3) has a substantially circular outer contour, wherein the third fluid channel section (6c) has a cross-section deviating from a circular shape at least in a first partial section (7),
wherein a wall surrounding the third fluid channel section (6c) at least in the first partial section (7) has at least one first circumferential area (8) arranged outside the plane E with a pressure wall thickness (D),
and wherein the wall surrounding the third fluid channel section (6c), at least in the first partial section (6c), has at least one second circumferential area (9) intersecting the plane E with a support wall thickness (S) which is greater than the pressure wall thickness (D),
**characterized in that**
the connector (1) is formed in one piece from a plastic, **in that** the wall surrounding the third fluid channel section (6c), at least in the first partial section (7), has at least two first circumferential areas (8) with the pressure wall thickness (D) arranged opposite one another and outside the plane E, and **in that** the wall surrounding the third fluid channel section (7), at least in the first partial section (7), has at least two second circumferential areas (9) which are arranged opposite one another, intersect the plane E and have at least the supporting wall thickness (S).

2. Connector (1) according to claim 1,
**characterized in that**
the pressure wall thickness (D) is dimensioned on the basis of a burst pressure, taking into account a material of the connector (1) and a maximum operating pressure in the connector (1), in particular the pressure wall thickness is dimensioned so that it can withstand four times a maximum operating pressure in the temperature range between 15 °C and 25 °C.

3. Connector (1) according to claim 1 or 2,
**characterized in that**
the support wall thickness (S) is dimensioned on the basis of a maximum mechanical load occurring in the first partial section (7), in particular bending with a component in the plane E, in particular not resulting from an operating pressure.

4. Connector (1) according to any one of claims 1 to 3,
**characterized in that**
the first partial section (7) is formed adjacent to the transition area (4).

5. Connector (1) according to any one of claims 1 to 4,
**characterized in that**
the cross-section of the first fluid channel section (6a) is circular, and that the cross-section of the second fluid channel section (6b) is at least partially non-circular, in particular that in the transition area (4) there is a transition from a circular cross-section to a non-circular cross-section at an angle (α).

6. Connector (1) according to any one of claims 1 to 5,
**characterized in that**
at least the first circumferential area (8) with the pressure wall thickness (D) and/or at least the second circumferential area (9) with at least the support wall thickness (S) extends, starting from the second connection area (3), at least partially into the transition area (4), in particular that at least the first circumferential area (8) with the pressure wall thickness (D) and/or at least the second circumferential area (9) with at least the supporting wall thickness (S) extend, starting from the second connection area (3), at least up to the level of an imaginary extension of the center axis (M1) of the first fluid channel section (6a) minus a radius of the first fluid channel section (6a), preferably at least up to the level of an imaginary extension of the center axis (M1) of the first fluid channel section (6a).

7. Connector (1) according to any one of claims 1 to 6,
**characterized in that**
the second fluid channel section (6b) has at least one transitional curve (10), in particular that the transitional curve (10) is arranged between a circular cross-section and a non-circular cross-section, in particular in the second fluid channel section (6b), in particular that the transitional curve (10) has an extension transverse to the longitudinal extension of the first fluid channel section (6a), which corresponds approximately to the diameter of the first fluid channel section (6a) or is greater than the diameter of the first fluid channel section (6a) and/or that a radius of the transitional curve (10) oriented in extension of the first fluid channel section (6a) corresponds approximately to a radius of the first fluid channel section (6a).

8. Connector (1) according to any one of claims 1 to 7,
**characterized in that**
the second fluid channel section (6b) is limited by at least one plane surface, preferably **in that** the plane surface is arranged in such a way that the center axis (M1) of the first fluid channel section (6a) passes through the plane surface as a normal.

9. Connector (1) according to any one of claims 1 to 8,
**characterized in that**
the cross-section of the third fluid channel section (6c) has, at least in the first partial section (7), two straight lines (11) arranged opposite and parallel to one another and two arcuate segments (12) arranged opposite one another, preferably **in that** the arcuate segments (12) are convex, and particularly preferably have a curved shape or a radius.

10. Connector (1) according to any one of claims 1 to 9,
**characterized in that**
the area of the cross-section of the fluid channel (6) at least in the first partial section (7) is larger than the area of the cross-section of the fluid channel (6) in the first fluid channel section (6a) and/or that the first partial section (7) of the third fluid channel section (6c) extends over approximately one third to one half of the extension of the center axis (M2) of the third fluid channel section (6c).

11. Connector (1) according to any one of claims 1 to 10,
**characterized in that**
at least one fluid seal (13) for sealing against an operating pressure in the connector (1) is arranged at least on an outer circumference of the second connection area (3), preferably **in that** the first partial section (7) extends at least between the transition area (4) and the fluid seal (13), in particular up to an edge (14) of a groove (15) for the fluid seal (13) facing away from the transition area (4).

12. Connector (1) according to any one of claims 1 to 11,
**characterized in that**
a second partial section (17) of the second connection area (3) extends on the side of the first partial section (7) facing away from the transition area (4), **in that** the third fluid channel section (6c) in the second partial section (7) has a cross-section deviating from a circular shape, **in that** at least the wall surrounding the third fluid channel section (6c) in the second partial section (7) has at least one second circumferential area (9) intersecting the plane E with the supporting wall thickness (S), and **in that** the supporting wall thickness (S) in the circumferential area (9) intersecting the plane E and/or the extension of the circumferential area (9) on the overall circumference is continuously reduced in the direction of an end area (18) facing away from the transition area (4).

13. Connector (1) according to claim 12,
**characterized in that**
the cross-section of the fluid channel (6) in the second partial section (17) changes from a non-circular cross-section to a circular cross-section in the end area (18) of the second connection area (3), while reducing at least the support wall thickness (S) and/or the extension of the circumferential area (9) on the overall circumference.

14. Connector (1) according to any one of claims 1 to 13,
**characterized in that**
the cross-section of the fluid channel (6) is circular at least in an end area (18) of the second connection area (3) facing away from the transition area (4).

15. Connector (1) according to any one of claims 1 to 14,
**characterized in that**
the first connection area (2) is designed as a connecting mandrel for insertion into a pipe or hose line and/or the second connection area (3) is designed as a connector plug.

## Revendications

1. Connecteur (1) pour conduites de fluide, comprenant au moins une première zone de raccordement (2), au moins une deuxième zone de raccordement (3), une zone de transition (4) et un canal de fluide (6), la zone de transition (4) étant formée entre la première zone de raccordement (2) et la deuxième zone de raccordement (3), la première zone de raccordement (2) présentant une première section de canal de fluide (6a), la zone de transition (4) présentant une deuxième section de canal de fluide (6b) et la deuxième zone de raccordement (3) présentant une troisième section de canal de fluide (6c) du canal de fluide (6),
la première zone de raccordement (2) et la deuxième zone de raccordement (3) étant disposées l'une par rapport à l'autre à un angle (α), l'angle (α) étant inférieur à 180°, les axes médians (M1, M2) de la première section de canal de fluide (6a) et de la troisième section de canal de fluide (6c) définissant un plan E, et la deuxième zone de raccordement (3) présentant un contour extérieur essentiellement circulaire, la troisième section de canal de fluide (6c) présentant, au moins dans une première section partielle (7), une section transversale s'écartant d'une forme circulaire,
dans lequel une paroi entourant la troisième section de canal de fluide (6c) au moins dans la première section partielle (7) présente au moins une première zone périphérique (8) disposée en dehors du plan E avec une épaisseur de paroi de pression (D),
et la paroi entourant la troisième section de canal de fluide (6c) au moins dans la première section partielle (7) présentant au moins une deuxième zone périphérique (9) coupant le plan E avec une épaisseur de paroi d'appui (S) augmentée par rapport à l'épaisseur de paroi de pression (D),
**caractérisé en ce que**
le connecteur (1) est réalisé d'une seule pièce en une matière plastique, **en ce que** la paroi entourant la troisième section de canal de fluide (6c) au moins dans la première section partielle (7) présente au moins deux premières zones périphériques (8) disposées en opposition l'une par rapport à l'autre et en dehors du plan E, avec l'épaisseur de paroi de pression (D), et
**en ce que** la paroi entourant la troisième section de canal de fluide (7) au moins dans la première section partielle (7) présente au moins deux deuxièmes zones périphériques (9) disposées en face l'une de l'autre, coupant le plan E, avec au moins l'épaisseur de paroi de soutien (S).

2. Connecteur (1) selon la revendication 1,
**caractérisé en ce que**
l'épaisseur de paroi de pression (D) est dimensionnée sur la base d'une pression d'éclatement, en tenant compte d'un matériau du connecteur (1) et d'une pression de fonctionnement maximale dans le connecteur (1), en particulier l'épaisseur de paroi de pression est dimensionnée de telle sorte qu'elle résiste à quatre fois une pression de service maximale dans la plage de température comprise entre 15 °C et 25 °C.

3. Connecteur (1) selon la revendication 1 ou 2,
**caractérisé en ce que**
l'épaisseur de paroi de soutien (S) est dimensionnée sur la base d'une charge mécanique maximale apparaissant dans la première section partielle (7), en particulier ne résultant pas d'une pression de service, en particulier une flexion avec une composante dans le plan E.

4. Connecteur (1) selon l'une quelconque des revendications 1 à 3,
**caractérisé en ce que**
la première section partielle (7) est formée de manière adjacente à la zone de transition (4).

5. Connecteur (1) selon l'une quelconque des revendications 1 à 4,
**caractérisé en ce que**
la section transversale de la première section de canal de fluide (6a) est circulaire, et **en ce que** la section transversale de la deuxième section de canal de fluide (6b) est au moins partiellement non circulaire, en particulier **en ce que** dans la zone de transition (4) , il y a une transition d'une section transversale circulaire à une section transversale non circulaire selon un angle (α).

6. Connecteur (1) selon l'une quelconque des revendications 1 à 5,
**caractérisé en ce que**
au moins la première zone périphérique (8) avec l'épaisseur de paroi de pression (D) et/ou au moins la deuxième zone périphérique (9) avec au moins l'épaisseur de paroi de soutien (S) s'étend, en partant de la deuxième zone de raccordement (3), au moins partiellement dans la zone de transition (4), en particulier **en ce qu'**au moins la première zone périphérique (8) avec l'épaisseur de paroi de pression (D) et/ou au moins la deuxième zone périphérique (9) avec au moins l'épaisseur de paroi de soutien (S) s'étendent à partir de la deuxième zone de raccordement (3) au moins jusqu'au niveau d'un prolongement imaginaire de l'axe central (M1) de la première section de canal de fluide (6a) moins un rayon de la première section de canal de fluide (6a), de préférence au moins jusqu'au niveau d'un prolongement imaginaire de l'axe central (M1) de la première section de canal de fluide (6a).

7. Connecteur (1) selon l'une quelconque des revendications 1 à 6,
**caractérisé en ce que**
la deuxième section de canal de fluide (6b) présente au moins un arrondi de transition (10), en particulier **en ce que** l'arrondi de transition (10) est disposé entre une section transversale circulaire et une section transversale non circulaire, en particulier dans la deuxième section de canal de fluide (6b), en particulier **en ce que** l'arrondi de transition (10) présente une extension transversale à l'extension longitudinale de la première section de canal de fluide (6a), qui correspond approximativement au diamètre de la première section de canal de fluide (6a) ou qui est supérieur au diamètre de la première section de canal de fluide (6a) et/ou **en ce qu'**un rayon de l'arrondi de transition (10) orienté dans le prolongement de la première section de canal de fluide (6a) correspond approximativement à un rayon de la première section de canal de fluide (6a).

8. Connecteur (1) selon l'une quelconque des revendications 1 à 7,
**caractérisé en ce que**
la deuxième section de canal de fluide (6b) est délimitée par au moins une surface plane, de préférence **en ce que** la surface plane est disposée de telle sorte que l'axe central (M1) de la première section de canal de fluide (6a) traverse la surface plane comme une normale.

9. Connecteur (1) selon l'une quelconque des revendications 1 à 8,
**caractérisé en ce que**
la section transversale de la troisième section de canal de fluide (6c) présente, au moins dans la première section partielle (7), deux droites (11) disposées en face l'une de l'autre et parallèlement l'une à l'autre et deux segments (12) en forme d'arc disposés en face l'un de l'autre, de préférence que les segments (12) en forme d'arc sont convexes, présentent de manière particulièrement préférée un tracé curviligne ou un rayon.

10. Connecteur (1) selon l'une quelconque des revendications 1 à 9,
**caractérisé en ce que**
la surface de la section transversale du canal de fluide (6) au moins dans la première section partielle (7) est supérieure à la surface de la section transversale du canal de fluide (6) dans la première section de canal de fluide (6a) et/ou **en ce que** la première section partielle (7) de la troisième section de canal de fluide (6c) s'étend sur environ un tiers à la moitié de l'étendue de l'axe central (M2) de la troisième section de canal de fluide (6c).

11. Connecteur (1) selon l'une quelconque des revendications 1 à 10,
**caractérisé en ce que**
au moins un joint d'étanchéité pour fluide (13) est disposé au moins sur une périphérie extérieure de la deuxième zone de raccordement (3) pour assurer l'étanchéité vis-à-vis d'une pression de fonctionnement dans le connecteur (1), de préférence **en ce que** la première section partielle (7) s'étend au moins entre la zone de transition (4) et le joint d'étanchéité pour fluide (13), en particulier jusqu'à un bord (14) d'une rainure (15) pour le joint d'étanchéité pour fluide qui est opposé à la zone de transition (4).

12. Connecteur (1) selon l'une quelconque des revendications 1 à 11,
**caractérisé en ce que**
une deuxième section partielle (17) de la deuxième zone de raccordement (3) s'étend sur le côté de la première section partielle (7) opposé à la zone de transition (4), **en ce que** la troisième section de canal de fluide (6c) présente dans la deuxième section partielle (7) une section transversale s'écartant d'une forme circulaire, **en ce qu'**au moins la paroi entourant la troisième section de canal de fluide (6c) dans la deuxième section partielle (7) comprend au moins une deuxième zone périphérique (9) coupant le plan E ayant l'épaisseur de paroi d'appui (S), et ce que l'épaisseur de paroi d'appui dans la zone périphérique coupant le plan E et/ou l'extension de la zone périphérique (9) sur la circonférence totale se réduisent de manière continue en direction d'une zone d'extrémité (18) opposée de la zone de transition (4).

13. Connecteur (1) selon la revendication 12,
**caractérisé en ce que**
la section transversale du canal de fluide (6) dans la deuxième section partielle (17) en réduisant au moins l'épaisseur de paroi d'appui (S) et/ou l'extension de la zone périphérique (9) sur la circonférence totale, passe d'une section transversale non circulaire à une section transversale circulaire dans la zone d'extrémité (18) de la deuxième zone de raccordement (3).

14. Connecteur (1) selon l'une quelconque des revendications 1 à 13,
**caractérisé en ce que**
la section transversale du canal de fluide (6) est réalisée de manière circulaire au moins dans une zone d'extrémité (18) de la deuxième zone de raccordement (3) opposée à la zone de transition (4).

15. Connecteur (1) selon l'une quelconque des revendications 1 à 14,
**caractérisé en ce que**
la première zone de raccordement (2) est réalisée sous la forme d'un mandrin de raccordement destiné à être inséré dans une conduite tubulaire ou un tuyau flexible et/ou la deuxième zone de raccordement (3) est réalisée sous la forme d'une fiche de raccordement.
